# EUROPEAN PATENT APPLICATION

(11) **EP 1 806 055 A1**
(43) Date of publication of application: **11.07.2007**
(21) Application number: 06077335.5
(22) Date of filing: 29.12.2006
(51) Int. Cl.: A23D 7/00, A23D 7/005, A23G 3/34, A23G 1/56

(54) **Speculaas product**

(30) Priority: 05.01.2006 NL 1030849
(71) Applicant: De Maeyer, Daniël Bernard, 2830 Willebroek (BE); De Smerk, Dirk Theo Melanie, 2880 Bornem (BE)
(72) Inventor: De Maeyer, Daniël Bernard, 2830 Willebroek (BE); De Smerk, Dirk Theo Melanie, 2880 Bornem (BE)
(74) Representative: Donné, Eddy

(57) **Abstract**

Speculaas product, characterised in that it consists of a sandwich spread which mainly comprises a mixture of grinded speculaas and a greasy matter.

## Description

The present invention concerns a speculaas product.

Speculaas (a sort of gingerbread, spiced biscuit) presently only exists in the form of a dry biscuit and is mostly consumed as a snack or a sweet.

A disadvantage of such a biscuit is that it can only be used with relative difficulty as a filling, since for example sandwiches with a filling of spiced biscuits are difficult to cut.

Moreover, such a biscuit can only be eaten with relative difficulty by people with chewing problems.

The present invention aims a speculaas product which provides a solution to the above-mentioned disadvantages.

To this aim, the invention concerns a speculaas product which consists of a sandwich spread which mainly comprises a mixture of grinded speculaas and a greasy matter.

An advantage of a speculaas product according to the present invention is that it is spreadable and can be easily used as a filling.

Another advantage is that a sandwich which is filled with such a speculaas product can be cut and chewed relatively easily.

In order to better explain the characteristics of the present invention, the following embodiments of a speculaas product according to the invention are given as an example only without being limitative in any way.

A speculaas product according to the present invention mainly comprises a greasy matter, preferably of vegetable origin, and an amount of grinded speculaas which is mixed with the greasy matter in the form of speculaas granules so as to form a sandwich spread, whereby the mass ratio of greasy matter/speculaas is situated between 0.7 and 7.5 and preferably amounts to 2.

An antioxidant is preferably added to the speculaas mix, for example an antioxidant whose E-number is situated between E300 and E321.

Further, also speculaas spices and/or candy syrup and/or a brown colouring agent are preferably added to the speculaas product according to the invention, whereby the amount of speculaas spices may be situated between 8 g to 60 g of speculaas spices per kilo of greasy matter and preferably amounts to some 35 g per kilo of greasy matter.

The added amounts of candy syrup and brown colouring agent are preferably situated between 10 g and 600 g, 3 and 300 g per kilo of greasy matter respectively.

Possibly, if desired, also fruits such as for example nuts and chocolate may be added to the speculaas product according to the invention.

Preparing the above-described speculaas product according to the invention is simple and as follows.

First, the speculaas is grinded up to speculaas granules, after which these speculaas granules are mixed together with the above-mentioned antioxidant, the speculaas spices, the candy syrup, the brown colouring agent and possibly the fruits or chocolate with the greasy matter so as to form a sandwich spread.

Next, this sandwich spread is preferably beaten up until it obtains a slightly foamy and creamy character.

The present invention is by no means restricted to the embodiments given as an example; on the contrary, such a speculaas product can be made according to different variants while still remaining within the scope of the invention.

## Claims

1. speculaas product, **characterised in that** it consists of a sandwich spread which mainly comprises a mixture of grinded speculaas and a greasy matter.

2. Speculaas product according to claim 1, **characterised in that** the above-mentioned greasy matter is of vegetable origin.

3. Speculaas spread according to claim 1, **characterised in that** the grinded speculaas has the form of speculaas granules.

4. Speculaas product according to claim 1, **characterised in that** it contains an antioxidant.

5. Speculaas product according to claim 1, **characterised in that** it contains speculaas spices.

6. Speculaas product according to claim 1, **characterised in that** it contains candy syrup.

7. Speculaas product according to claim 1, **characterised in that** it contains a brown colouring agent.

8. Speculaas product according to claim 1, **characterised in that** it contains fruits.

9. Speculaas product according to claim 8, **characterised in that** the above-mentioned fruits are nuts.

10. Speculaas product according to claim 1, **characterised in that** it contains chocolate.

11. Speculaas product according to claim 1, **characterised in that** the mass ratio of greasy matter/speculaas is situated between 0.7 and 7.5.

12. Speculaas product according to claim 11, **characterised in that** the above-mentioned mass ratio of greasy matter/speculaas is equal to 2.
